# EUROPÄISCHE PATENTSCHRIFT

(11) **EP 3 789 450 B1**
(45) Veröffentlichungstag und Bekanntmachung des Hinweises auf die Patenterteilung: **17.12.2025**
(21) Anmeldenummer: 19195518.6
(22) Anmeldetag: 05.09.2019
(51) Int. Cl.: C08L 9/00

(54) **MISCHUNG UMFASSEND EINEN KLEBSTOFF UND EINEN FÜLLSTOFF AUF BASIS VON WACHS**
MIXTURE COMPRISING AN ADHESIVE AND A FILLER BASED ON WAX
MÉLANGE COMPRENANT UN ADHÉSIF ET UNE CHARGE À BASE DE CIRE

(43) Veröffentlichungstag der Anmeldung: 10.03.2021
(73) Patentinhaber: Henkel AG & Co. KGaA, 40589 Düsseldorf (DE)
(72) Erfinder: Klotz, Michael, 69123 Heidelberg (DE); Nowicki, Slawomir, 69123 Heidelberg (DE); Gerold, Verena, 69123 Heidelberg (DE)

(56) Entgegenhaltungen:
- US-B2- 9 290 683

## Beschreibung

Die vorliegende Erfindung betrifft eine Mischung umfassend einen Klebstoff und einen Füllstoff auf Basis von Wachs, das in Form von Fasern und/oder Faserbündel vorliegt, die ein oder mehrere Volumengefüge untereinander ausbilden, ein Verfahren zur Herstellung einer solchen Mischung und deren Verwendung im Fahrzeugbau. Des Weiteren betrifft die vorliegende Erfindung die Verwendung eines Füllstoffs auf Basis von Wachs, bei dem das Wachs in Form von Fasern und/oder Faserbündel vorliegt, die ein oder mehrere Volumengefüge untereinander ausbilden als Adsorptionsmittel in Klebstoffen.

In der Automobilindustrie ist das Kleben zu einer Schlüsseltechnologie geworden und nimmt immer mehr an Bedeutung zu. Dabei steigt die Anzahl der Komponenten, die miteinander verklebt anstatt verschweißt werden, immer weiter an. Durch das Kleben von Komponenten ist es nicht nur möglich das Gewicht des Fahrzeugs signifikant zu reduzieren, es ist inzwischen auch zu einem Sicherheitsaspekt geworden, da Fahrzeuge mit hauptsächlich geklebten Komponenten in Crashtest oft besserer Bewertungen erhalten als Fahrzeuge, die aus hauptsächlich verschweißten Komponenten bestehen.

Um den unterschiedlichen Anforderungen beim Verkleben der verschiedenen Komponenten eines Fahrzeugs gerecht zu werden, wurden eine Reihe optimierter Klebstoffe entwickelt, beispielsweise Karosserieklebstoffe, Scheibenklebstoffe und Flächenklebstoffe. Alle diese Klebstoffe werden unterschiedlich appliziert und müssen unterschiedlichen Endanforderungen entsprechen, so dass unterschiedliche Klebstofftypen zum Einsatz kommen.

So werden beispielsweise Karosserieklebstoffe in der Regel vor der kathodischen Tauchlackierung appliziert und müssen diese unbeschadet durchqueren sowie gegenüber den hohen Temperaturen beim Trocknen der Tauchlackierung beständig sein. Ein Abfließen des Klebstoffs ist ebenso unerwünscht wie das Herausfließen aus bereits gefügten Bereichen. Eine hohe Auswaschbeständigkeit ist unabdingbar, zumal sehr hohe Kräfte beim nahen Passieren von Düsen im Tauchprozess auftreten können.

US 9,290,683 B2 offenbart härtbare Zusammensetzungen, die ein vorzugsweise flüssiges Ölverdrängendes Mittel enthalten können.

In diesem Zusammenhang besteht der Bedarf nach Klebstoffen, die im Karosseriebau verwendet werden können und vor allem eine hohe Korrosions- und Feuchtigkeitsbeständigkeit sowie eine gute Kompatibilität mit den im Karosseriebau verwendeten Prozessölen wie Zieh-, Form- und Korrosionsschutzölen aufweisen. Es ist daher die Aufgabe der vorliegenden Erfindung einen solchen Klebstoff zur Verfügung zu stellen.

Es wurde überraschend gefunden, dass diese Aufgabe durch eine Mischung gelöst wird, die neben einem Klebstoff einen Füllstoff mit adsorbierenden Eigenschaften auf Basis von Wachs aufweist.

Ein erster Gegenstand der vorliegenden Erfindung ist daher eine Mischung enthaltend einen Klebstoff und einen Füllstoff auf Basis von Wachs, wobei das Wachs in Form von Fasern und/oder Faserbündel vorliegt, die ein oder mehrere Volumengefüge untereinander ausbilden.

Durch den Zusatz des Füllstoffes ließen sich die Korrosions- und Feuchtigkeitsbeständigkeit verschiedener Klebstoffe deutlich verbessern. Darüber hinaus zeigte sich, dass die Mischung eine gute Kompatibilität mit den in der Autoindustrie üblicherweise verwendeten Substanzen aufwies, so dass sie in Kombination mit einer Reihe unterschiedlicher Öle und Substrate eingesetzt werden kann.

Der Füllstoff auf Basis von Wachs liegt in Form von Fasern und/oder Faserbündeln vor, die ein oder mehrere Volumengefüge untereinander ausbilden. Im Rahmen der vorliegenden Erfindung ist unter Volumengefüge ein Gefüge aus Fasern und/oder Faserbündeln zu verstehen, das durch die Haftung der Fasern und/oder Faserbündel untereinander gebildet wird. Dabei handelt es sich um ein dreidimensionales, ungeordnetes Netzwerk, bei dem mindestens 80% der Fasern und/oder Faserbündel willkürlich untereinander vermascht verbunden sind, wobei das Volumengefüge Lufteinschlüsse aufweisen kann.

Der in der erfindungsgemäßen Mischung verwendete Füllstoff ist vorzugsweise ein Adsorptionsmittel, insbesondere ein Adsorptionsmittel für hydrophobe Substanzen. Es wurde überraschend gefunden, dass durch die Zugabe eines Adsorptionsmittels insbesondere die Korrosions- und Feuchtigkeitsbeständigkeit der Mischung verbessert werden konnte.

Bei dem in der erfindungsgemäßen Mischung verwendeten Füllstoff handelt es sich um einen Füllstoff auf Basis von Wachs. Unter Wachs im Sinne der vorliegenden Erfindung sind organische Verbindungen zu verstehen, die bei Raumtemperatur fest sind und oberhalb ihres Schmelzpunkts eine Flüssigkeit niedriger Viskosität bilden. Im Rahmen der vorliegenden Erfindung ist das Wachs, das die Basis für den Füllstoff bildet, vorzugsweise ausgewählt aus der Gruppe bestehend aus natürlichen und synthetischen Wachsen. In einer besonders bevorzugten Ausführungsform ist das Wachs ausgewählt aus der Gruppe der synthetischen Wachse, insbesondere der Gruppe bestehend aus Polyethylenwachs, Polypropylenwachs, Polyethylen-Polypropylen-Copolymerwachs und Mischungen hiervon. In einer alternativ bevorzugten Ausführungsform ist das Wachs ausgewählt aus der Gruppe der natürlichen Wachse, insbesondere aus der Gruppe bestehend aus Montanwachs, Carnaubawachs, Bienenwachs und Candelillawachs.

Es wurde überraschend gefunden, dass die Adsorptionseigenschaften des Füllstoffs in der erfindungsgemäßen Mischung deutlich verbessert werden konnten, wenn Wachse mit einem bestimmten Molekulargewicht eingesetzt wurden, insbesondere solche, deren Molekulargewicht bei nicht mehr als 15000 g/mol lag. Daher ist eine Ausführungsform bevorzugt, in der das Wachs ein zahlenmittleres Molekulargewicht von weniger als 15000 g/mol aufweist, besonders bevorzugt 200 bis 11000 g/mol. Das Molekulargewicht des Wachses kann dabei beispielsweise mittels GPC bestimmt werden.

Die erfindungsgemäße Mischung zeichnet sich besonders durch ihre hohe Feuchtigkeitsbeständigkeit aus. Ohne an eine bestimmte Theorie gebunden zu sein, wird davon ausgegangen, dass dies insbesondere auf die Anwesenheit des Füllstoffs zurückzuführen ist, der in Form eines durch Faser und/oder Faserbündel gebildetes Volumengefüge vorliegt. Hier hat es sich als besonders vorteilhaft erwiesen, wenn für die Ausbildung des Volumengefüges Fasern verwendet werden, die mittels Schmelzspinnverfahren hergestellt wurden. Daher ist eine Ausführungsform der vorliegenden Erfindung bevorzugt, in der die Fasern, die das Volumengefüge des Füllstoffs in der erfindungsgemäßen Mischung ausbilden, mittels Schmelzspinnverfahren und anschließendem Verdüsen hergestellt werden.

Der in der erfindungsgemäßen Mischung enthaltene Füllstoff liegt in Form eines Volumengebildes vor, das aus Faser und/oder Faserbündeln gebildet wird. An die Länge der Fasern und/oder der Faserbündel sind dabei keine besonderen Anforderungen zu stellen. Vielmehr können Fasern und/oder Faserbündel eingesetzt werden, deren Länge von wenigen Millimetern bis zu mehreren Metern variiert, wobei es bevorzugt ist, Fasern und/oder Faserbündel unterschiedlicher Längen zu verwenden. Weiterhin hat es sich als vorteilhaft erwiesen, Fasern und/oder Faserbündel unterschiedlicher Durchmesser zu verwenden, wobei die Fasern und/oder Faserbündel vorzugsweise einen Durchmesser von 20 nm bis 5 mm, besonders bevorzugt 50 nm bis 2 mm aufweisen.

In einer bevorzugten Ausführungsform weist die erfindungsgemäße Mischung einen Anteil von 0,1 bis 30 Gew.-%, vorzugsweise 0,5 bis 10 Gew.-% des Füllstoffs auf, jeweils bezogen auf das Gesamtgewicht der Mischung.

Es wurde im Rahmen der vorliegenden Erfindung überraschend festgestellt, dass eine Reihe verschiedener Klebstoffe in der erfindungsgemäßen Mischung eingesetzt werden können. In einer bevorzugten Ausführungsform ist der in der erfindungsgemäßen Mischung enthaltene Klebstoff daher ausgewählt aus der Gruppe bestehend aus Kautschuk-Klebstoffen, Polyurethan-Klebstoffen, Acrylat-Klebstoffen, Epoxid-Klebstoffen, Klebstoffen auf Basis von EVA (Ethylen-Vinylacetat)-Polymeren und Klebstoffen auf Basis silanmodifizierter Polymere.

Die erfindungsgemäße Mischung kann weitere Bestandteile enthalten, wie beispielsweise weitere Füllstoffe, wie Calciumcarbonat, und/oder weitere polymere Zusätze. In einer bevorzugten Ausführungsform weist die erfindungsgemäße Mischung weiterhin ein Homopolymer auf Basis von mehrfach ungesättigten C₄ bis C₁₄-Alkylketten auf. In einer besonders bevorzugten Ausführungsform weist die erfindungsgemäße Mischung weiterhin Polybutadien auf, vorzugsweise in einer Menge von 5 bis 25 Gew.-%, besonders bevorzugt 10 bis 20 Gew.-%, jeweils bezogen auf das Gesamtgewicht der Mischung.

Die Form, in der die erfindungsgemäße Mischung vorliegt, kann je nach Anwendungsgebiet angepasst werden. Bei manchen Anwendungen kann es wünschenswert sein, dass die Mischung in Form einer Paste oder Flüssigkeit vorliegt, so dass sie einfach auf ein Substrat aufgebracht werden kann. Daher liegt die erfindungsgemäße Mischung vorzugsweise in flüssiger, fester oder pastöser Form vor.

Die im Stand der Technik beschriebenen Mischungen können unter anderem den Nachteil aufweisen, dass sie nur mit einer begrenzten Anzahl der in der zur Herstellung von Automobilen verwendeten Substanzen kompatibel sind, so dass sie nur in begrenztem Umfang verwendet werden können. Im Gegensatz dazu weist die erfindungsgemäße Mischung eine gute Kompatibilität mit gängigen in der Automobilindustrie verwendeten Substanzen auf und kann in einer Reihe von Anwendungen eingesetzt werden, wobei weitere Modifikationen für die jeweilige Anwendung vorgenommen werden können. Daher können die Mischungen auch eingesetzte werden, wenn das Substrat mit Öl und/oder Schmierstoff behandelt wurde bzw. Öl und/oder Schmierstoff auf der Oberfläche des Substrats sind, wobei das Öl und/oder der Schmierstoff ausgewählt sein kann aus der Gruppe bestehend aus natürlichen und synthetischen Ölen und natürlichen und synthetischen Schmierstoffen, insbesondere Ziehöle, Formöle, Korrosionsschutzöle und Trockenschmierstoffe.

Ein weiterer Gegenstand der vorliegenden Erfindung ist ein Verfahren zur Herstellung der erfindungsgemäßen Mischung. Das erfindungsgemäße Verfahren umfasst die Schritte des Bereitstellens eines Klebstoffs und eines Füllstoffs auf Basis von Wachs, wobei das Wachs in Form von Fasern und/oder Faserbündel vorliegt, die ein oder mehrere Volumengefüge untereinander ausbilden, und mischen des Klebstoffs und des Füllstoffs. Das Mischen kann dabei in Abhängigkeit der Konsistenz des Klebstoffs beispielsweise mittels Horizontalknetern oder in Rührkesseln erfolgen.

Die gute Verträglichkeit der erfindungsgemäßen Mischung mit anderen Substanzen erlaubt ihren Einsatz in einer Vielzahl von Anwendungsgebieten. Überraschenderweise hat sich die Mischung jedoch als besonders geeignet für die Verwendung in der Fahrzeugfertigung herausgestellt. Daher ist ein weiterer Gegenstand der vorliegenden Erfindung die Verwendung der erfindungsgemäßen Mischung in der Fahrzeugfertigung. In einer bevorzugten Ausführungsform wird die erfindungsgemäße Mischung im Karosseriebau verwendet.

Ein weiterer Gegenstand der vorliegenden Erfindung ist die Verwendung eines Füllstoffs auf Basis von Wachs, wobei das Wachs in Form von Fasern und/oder Faserbündel vorliegt, die ein oder mehrere Volumengefüge untereinander ausbilden, als Adsorptionsmittel für hydrophobe Substanzen in Klebstoffen.

Die vorliegende Erfindung soll anhand der folgenden Beispiele näher erläutert werden, wobei diese jedoch keinesfalls als Einschränkung des Erfindungsgedanken zu verstehen sind.

### Beispiele:

Eine erfindungsgemäße Mischung wurde hergestellt, indem Festkautschuk, Polybutadien, Calciumcarbonat und ein geeigneter Füllstoff auf Basis von Wachs miteinander gemischt wurden.

Geeignete Füllstoffe auf Basis von Wachs sind beispielsweise in der Druckschrift EP 2 392 630 beschrieben, auf die hier ausdrücklich Bezug genommen wird, und unter dem Handelsnamen Deurex PURE von der Firma Deurex AG, Deutschland, kommerziell erhältlich.

Die Feuchtigkeits- und Korrosionsbeständigkeit wurde unter verschiedenen Bedingungen getestet, wobei folgende Substrate verwendet wurden:
EGS: Stahl elo-verzinkt Außenhaut (z.B. DX54D+ZE75/75, Dicke ≥0,8mm)
HDG: Stahl feuer-verzinkt Außenhaut (z.B. DX54D +Z100, Dicke ≥0,8mm)
ALU: Aluminium (z.B. AI6-OUT Surfalex, Dicke ≥0,8mm)

Es wurde jeweils der Verbund zwischen den Substraten nach der angegebenen Zeit getestet:
++: sehr gut
+: gut
o: zufriedenstellend

### Bördelfalzklebstoffe

**Tabelle 1:**

| Substrate: EGS / HDG Mischverklebung | | | | | | | | | | |
|---|---|---|---|---|---|---|---|---|---|---|
| Lagerbedingung | 23 °C / 80% r.F.* | | | | | 40 °C / 100% r.F. * | | | | |
| Dauer der Lagerung (Woche) | 1 | 2 | 3 | 4 | 5 | 1 | 2 | 3 | 4 | 5 |
| Ohne Vorhärtung | ++ | ++ | ++ | ++ | ++ | ++ | ++ | ++ | + | + |
| Nach 15 min bei 160 °C | ++ | ++ | ++ | ++ | ++ | ++ | + | + | o | o |
| Nach KTL Ofen (ohne Vorhärtung) | ++ | ++ | ++ | ++ | ++ | + | + | o | o | o |

**Tabelle 2:**

| Substrate: ALU / ALU | | | | | | | | | | |
|---|---|---|---|---|---|---|---|---|---|---|
| Lagerbedingung | 23 °C / 80% r.F.* | | | | | 40 °C / 100% r.F. * | | | | |
| Dauer der Lagerung (Woche) | 1 | 2 | 3 | 4 | 5 | 1 | 2 | 3 | 4 | 5 |
| Ohne Vorhärtung | ++ | ++ | ++ | ++ | ++ | ++ | ++ | ++ | + | + |
| Nach 15 min bei 160°C | ++ | ++ | ++ | ++ | ++ | ++ | ++ | ++ | o | o |
| Nach KTL Ofen (ohne Vorhärtung) | ++ | ++ | ++ | ++ | ++ | ++ | + | + | o | o |

### Unterfütterungsklebstoffe

**Tabelle 3:**

| Substrate: EGS/ HDG Mischverklebung | | | | | | | | | | |
|---|---|---|---|---|---|---|---|---|---|---|
| Lagerbedingung | 23 °C / 80% r.F.* | | | | | 40 °C / 100% r.F.* | | | | |
| Dauer der Lagerung (Woche) | 1 | 2 | 3 | 4 | 5 | 1 | 2 | 3 | 4 | 5 |
| Ohne Vorhärtung | ++ | ++ | ++ | ++ | ++ | ++ | ++ | ++ | ++ | ++ |
| Nach 15 min bei 160 °C | ++ | ++ | ++ | ++ | ++ | ++ | ++ | ++ | ++ | ++ |
| Nach KTL Ofen (ohne Vorhärtung) | ++ | ++ | ++ | ++ | ++ | ++ | ++ | ++ | ++ | ++ |

**Tabelle 4:**

| Substrate: ALU / ALU | | | | | | | | | | |
|---|---|---|---|---|---|---|---|---|---|---|
| Lagerbedingung | 23 °C / 80% r.F.* | | | | | 40 °C / 100% r.F.* | | | | |
| Dauer der Lagerung (Woche) | 1 | 2 | 3 | 4 | 5 | 1 | 2 | 3 | 4 | 5 |
| Ohne Vorhärtung | ++ | ++ | ++ | ++ | ++ | ++ | ++ | ++ | ++ | ++ |
| Nach 15 min bei 160 °C | ++ | ++ | ++ | ++ | ++ | ++ | ++ | ++ | ++ | ++ |
| Nach KTL Ofen | ++ | ++ | ++ | ++ | ++ | ++ | ++ | ++ | ++ | ++ |
| (ohne Vorhärtung) | | | | | | | | | | |

| | | | | | | | | | | |
|---|---|---|---|---|---|---|---|---|---|---|
| *) relative Feuchtigkeit | | | | | | | | | | |

Wie aus den in den Tabellen 1 bis 4 zusammengefassten Daten ersichtlich, weist die erfindungsgemäße Mischung eine exzellente Feuchtigkeitsbeständig auf und zeigt auch unter Lagerbedingungen von 40°C und 100% relative Feuchtigkeit nach 5 Wochen noch hervorragende Verbundeigenschaften.

Als Vergleich werden im Folgenden die Ergebnisse der gleichen Mischung ohne einen Füllstoff auf Basis von Wachs gezeigt:

### Bördelfalzklebstoffe

**Tabelle 5:**

| Substrate: EGS / HDG Mischverklebung | | | | | | | | | | |
|---|---|---|---|---|---|---|---|---|---|---|
| Lagerbedingung | 23 °C / 80% r.F.* | | | | | 40 °C / 100% r.F. * | | | | |
| Dauer der Lagerung (Woche) | 1 | 2 | 3 | 4 | 5 | 1 | 2 | 3 | 4 | 5 |
| Ohne Vorhärtung | ++ | + | o | - | - | ++ | + | o | - | - |
| Nach 15 min bei 160°C | ++ | + | o | - | - | + | o | - | - | - |
| Nach KTL Ofen (ohne Vorhärtung) | + | o | - | - | - | o | - | - | - | - |

**Tabelle 6:**

| Substrate: ALU / ALU | | | | | | | | | | |
|---|---|---|---|---|---|---|---|---|---|---|
| Lagerbedingung | 23 °C / 80% r.F.* | | | | | 40 °C / 100% r.F. * | | | | |
| Dauer der Lagerung (Woche) | 1 | 2 | 3 | 4 | 5 | 1 | 2 | 3 | 4 | 5 |
| Ohne Vorhärtung | ++ | + | o | - | - | ++ | + | o | - | - |
| Nach 15 min bei 160 °C | ++ | + | o | - | - | + | o | - | - | - |
| Nach KTL Ofen (ohne Vorhärtung) | + | o | - | - | - | o | - | - | - | - |

### Unterfütterungsklebstoffe

**Tabelle 7:**

| Substrate: EGS/ HDG Mischverklebung | | | | | | | | | | |
|---|---|---|---|---|---|---|---|---|---|---|
| Lagerbedingung | 23 °C / 80% r.F.* | | | | | 40 °C / 100% r.F.* | | | | |
| Dauer der Lagerung (Woche) | 1 | 2 | 3 | 4 | 5 | 1 | 2 | 3 | 4 | 5 |
| Ohne Vorhärtung | ++ | ++ | + | o | - | ++ | + | o | o | - |
| Nach 15 min bei 160°C | ++ | + | + | o | - | + | o | - | - | - |
| Nach KTL Ofen (ohne Vorhärtung) | + | + | o | - | - | + | o | - | - | - |

**Tabelle 8:**

| Substrate: ALU / ALU | | | | | | | | | | |
|---|---|---|---|---|---|---|---|---|---|---|
| Lagerbedingung | 23 °C / 80% r.F.* | | | | | 40 °C / 100% r.F.* | | | | |
| Dauer der Lagerung (Woche) | 1 | 2 | 3 | 4 | 5 | 1 | 2 | 3 | 4 | 5 |
| Ohne Vorhärtung | ++ | ++ | + | o | - | ++ | + | o | o | - |
| Nach 15 min bei 160°C | ++ | + | + | o | - | + | o | - | - | - |
| Nach KTL Ofen (ohne Vorhärtung) | + | + | o | - | - | + | o | - | - | - |

Wie aus dem Vergleich der Daten aus den Tabellen 1 bis 4 mit denen der Tabellen 5 bis 8, weist die erfindungsgemäße Mischung eine deutlich verbesserte Feuchtigkeitsbeständig auf.

## Patentansprüche

1. Mischung umfassend einen Klebstoff und einen Füllstoff auf Basis von Wachs, **dadurch gekennzeichnet, dass** das Wachs in Form von Fasern und/oder Faserbündel vorliegt, die ein oder mehrere Volumengefüge untereinander ausbilden.

2. Mischung gemäß Anspruch 1, **dadurch gekennzeichnet, dass** der Füllstoff ein Füllstoff für hydrophobe Substanzen ist.

3. Mischung gemäß wenigstens einem der vorangehenden Ansprüche, **dadurch gekennzeichnet, dass** das Wachs ausgewählt ist aus der Gruppe bestehend aus natürlichen und synthetischen Wachsen.

4. Mischung gemäß Anspruch 3, **dadurch gekennzeichnet, dass** das Wachs ausgewählt ist aus der Gruppe bestehend aus Polyethylenwachs, Polypropylenwachs, Polyethylen-Polypropylen-Copolymerwachs sowie Mischungen hiervon.

5. Mischung gemäß Anspruch 3, **dadurch gekennzeichnet, dass** das Wachs ausgewählt ist aus der Gruppe bestehend aus Montanwachs, Carnaubawachs, Bienenwachs und Candelillawachs.

6. Mischung gemäß wenigstens einem der vorangehenden Ansprüche, **dadurch gekennzeichnet, dass** das Wachs ein zahlenmittleres Molekulargewicht von nicht mehr als 15.000 g/mol, vorzugsweise von 200 bis 11.000 g/mol aufweist, bestimmt mittels GPC.

7. Mischung gemäß wenigstens einem der vorangehenden Ansprüche, **dadurch gekennzeichnet, dass** die Fasern mittels Schmelzspinnverfahren und anschließendem Verdüsen hergestellt werden.

8. Mischung gemäß wenigstens einem der vorangehenden Ansprüche, **dadurch gekennzeichnet, dass** der Füllstoff in einer Menge von 0,1 bis 30 Gew.-%, vorzugsweise 0,5 bis 10 Gew.-% vorliegt, jeweils bezogen auf das Gesamtgewicht der Mischung.

9. Mischung gemäß wenigstens einem der vorangehenden Ansprüche, **dadurch gekennzeichnet, dass** der Klebstoff ausgewählt ist aus der Gruppe bestehend aus Kautschuk-Klebstoffen, Polyurethan-Klebstoffen, Acrylat-Klebstoffen, Epoxid-Klebstoffe, Klebstoffen auf Basis von EVA (Ethylen-Vinylacetat)-Polymeren und Klebstoffe auf Basis silanmodifizierter Polymere.

10. Mischung gemäß wenigstens einem der vorangehenden Ansprüche, **dadurch gekennzeichnet, dass** die Mischung in flüssiger, fester oder pastöser Form vorliegt.

11. Verfahren zur Herstellung einer Mischung gemäß wenigstens einem der Ansprüche 1 bis 10, wobei das Verfahren die Schritte des Bereitstellens eines Klebstoffs und eines Füllstoffs auf Basis von Wachs, wobei das Wachs in Form von Fasern und/oder Faserbündel vorliegt, die ein oder mehrere Volumengefüge untereinander ausbilden, und mischen des Klebstoffs und des Füllstoffs umfasst.

12. Verwendung einer Mischung gemäß wenigstens einem der Ansprüche 1 bis 10 in der Fahrzeugfertigung.

13. Verwendung eines Füllstoffs auf Basis von Wachs, wobei das Wachs in Form von Fasern und/oder Faserbündel vorliegt, die ein oder mehrere Volumengefüge untereinander ausbilden, als Adsorptionsmittel für hydrophobe Substanzen in Klebstoffen.

## Claims

1. A mixture comprising an adhesive and a wax-based filler,
**characterized in that** the wax is present in the form of fibers and/or fiber bundles, which form one or more volume structures with one another.

2. The mixture according to claim 1, **characterized in that** the filler is a filler for hydrophobic substances.

3. The mixture according to at least one of the preceding claims, **characterized in that** the wax is selected from the group consisting of natural and synthetic waxes.

4. The mixture according to claim 3, **characterized in that** the wax is selected from the group consisting of polyethylene wax, polypropylene wax, polyethylene-polypropylene copolymer wax and mixtures thereof.

5. The mixture according to claim 3, **characterized in that** the wax is selected from the group consisting of montan wax, carnauba wax, beeswax and candelilla wax.

6. The mixture according to at least one of the preceding claims, **characterized in that** the wax has a number-average molecular weight of not more than 15,000 g/mol, preferably from 200 to 11,000 g/mol, determined by means of GPC.

7. The mixture according to at least one of the preceding claims, **characterized in that** the fibers are produced by means of a melt spinning process and subsequent atomization.

8. The mixture according to at least one of the preceding claims, **characterized in that** the filler is present in an amount of 0.1 to 30 wt.%, preferably 0.5 to 10 wt.%, in each case based on the total weight of the mixture.

9. The mixture according to at least one of the preceding claims, **characterized in that** the adhesive is selected from the group consisting of rubber adhesives, polyurethane adhesives, acrylate adhesives, epoxy adhesives, adhesives based on EVA (ethylene vinyl acetate) polymers and adhesives based on silane-modified polymers.

10. The mixture according to at least one of the preceding claims, **characterized in that** the mixture is liquid, solid or pasty.

11. A method for preparing a mixture according to at least one of claims 1 to 10, wherein the method comprises the steps of providing an adhesive and a wax-based filler, wherein the wax is in the form of fibers and/or fiber bundles that form one or more volume structures with one another, and mixing the adhesive and the filler.

12. The use of a mixture according to at least one of claims 1 to 10 in vehicle production.

13. The use of a wax-based filler, wherein the wax is in the form of fibers and/or fiber bundles which form one or more volume structures with one another, as an adsorbent for hydrophobic substances in adhesives.

## Revendications

1. Mélange comprenant un adhésif et une matière de charge à base de cire, **caractérisé en ce que** la cire se présente sous forme de fibres et/ou de faisceaux de fibres formant une ou plusieurs structures en volume entre elles.

2. Mélange selon la revendication 1, **caractérisé en ce que** la matière de charge est une matière de charge pour substances hydrophobes.

3. Mélange selon au moins l'une des revendications précédentes, **caractérisé en ce que** la cire est choisie dans le groupe constitué de cires naturelles et de cires synthétiques.

4. Mélange selon la revendication 3, **caractérisé en ce que** la cire est choisie dans le groupe constitué de cire de polyéthylène, cire de polypropylène, cire de copolymère polyéthylène-polypropylène et mélanges de ceux-ci.

5. Mélange selon la revendication 3, **caractérisé en ce que** la cire est choisie dans le groupe constitué de cire de Montan, cire de carnauba, cire d'abeille et cire de candelilla.

6. Mélange selon au moins l'une des revendications précédentes, **caractérisé en ce que** la cire présente une masse moléculaire moyenne en nombre ne dépassant pas 15 000 g/mol, de préférence allant de 200 à 11 000 g/mol, déterminée par GPC.

7. Mélange selon au moins l'une des revendications précédentes, **caractérisé en ce que** les fibres sont obtenues au moyen d'un procédé de filage à chaud suivi d'une atomisation.

8. Mélange selon au moins l'une des revendications précédentes, **caractérisé en ce que** la matière de charge se présente en une quantité allant de 0,1 à 30 % en poids, de préférence de 0,5 à 10 % en poids, respectivement par rapport au poids total du mélange.

9. Mélange selon au moins l'une des revendications précédentes, **caractérisé en ce que** l'adhésif est choisi dans le groupe constitué d'adhésifs de caoutchouc, adhésifs de polyuréthane, adhésifs d'acrylate, adhésifs d'époxyde, adhésifs à base de polymères EVA (éthylène-acétate de vinyle) et adhésifs à base de polymères modifiés par un silane.

10. Mélange selon au moins l'une des revendications précédentes, **caractérisé en ce que** le mélange se présente sous forme liquide, solide ou pâteuse.

11. Procédé de préparation d'un mélange selon au moins l'une des revendications 1 à 10, dans lequel le procédé comprend les étapes de fourniture d'un adhésif et d'une matière de charge à base de cire, dans lequel la cire se présente sous forme de fibres et/ou de faisceaux de fibres formant une ou plusieurs structures en volume entre elles, et de mélange de l'adhésif et de la matière de charge.

12. Utilisation d'un mélange selon au moins l'une des revendications 1 à 10 dans la fabrication de véhicules.

13. Utilisation d'une matière de charge à base de cire, dans laquelle la cire se présente sous forme de fibres et/ou de faisceaux de fibres formant une ou plusieurs structures en volumes entre elles, en tant que moyen d'adsorption pour substances hydrophobes dans des adhésifs.
